# EUROPEAN PATENT APPLICATION

(11) **EP 4 614 118 A1**
(43) Date of publication of application: **10.09.2025**
(21) Application number: 25161506.8
(22) Date of filing: 04.03.2025
(51) Int. Cl.: G01F 7/00, G01F 1/10, G01F 1/28, G01F 15/00

(54) **FLOW METER**

(30) Priority: 06.03.2024 IT 202400004981
(71) Applicant: Dab Pumps S.p.A., 35035 Mestrino (Padova) (IT)
(72) Inventor: Puccioni, Fabiano, 35035 Mestrino (PD) (IT); Tazioli, Stefano, 35035 Mestrino (PD) (IT); Porcari, Alessandro, 35035 Mestrino (PD) (IT)
(74) Representative: De Filippis, Sara

(57) **Abstract**

A flow meter (100) for measuring the flow rate of a fluid characterized by comprising
a casing (1) having a first end (101) into which the fluid enters and a second end (102) from which the fluid exits, and within which a first duct (11) for receiving the fluid is present when it is at low flow rates;
a measuring element (2) arranged internally to the first duct (11) for measuring the flow within the first duct (11);
said flow meter (100) being characterized by also comprising:
a second duct (12), placed inside the casing (1), for receiving the fluid at high flow rates
a closing element (3) which, when the flow rate exceeds an opening threshold, allows the fluid to flow into the second duct (12)
an elastic element (4), connected to the closing element (3), for moving the closing element (3) from a closing configuration, in which the flow rate does not exceed the opening threshold, not overcoming the resistance of the elastic element (4) and the closing element (3) closes the second duct (12), to an opening configuration in which the flow rate exceeds the opening threshold, overcoming the resistance of the elastic element (4), and the closing element (3) opens the second duct (12).

## Description

The present invention concerns a flow meter with bypass.

### Field of invention

The invention fits into the technical field of flow measurement instruments, in particular in the technical field of flow meters for measuring the flow rate of a liquid.

### Prior art

There is a wide range of flow measurement instruments on the market and in particular flow meters for measuring the flow or mass flow rate of a liquid or a gas.

Flow meters have considerable relevance in the market since, in any sector of modern industry, flow measurement has become essential in process controls.

Advances in technology currently provide a notable variety of spring, ultrasonic, turbine, rotary blade, volumetric, vortex, magnetic, Pitot tube, calibrated diaphragm, etc. flow meters.

However, although flow meters have become increasingly precise and robust over time, they still have some limitations.

In particular, systems capable of measuring the flow rate of a liquid at both low and high flow rates are extremely complex and expensive.

In more detail, the cheapest and most widely used flow meters measure the flow rate either at low flow rates, or at high flow rates but not in both situations.

For example, there are cheap flow meters for reading flow from 0 l/min to 100 l/min or from 60 l/min to 300 I/min, but flow meters that cover the entire range 0-300 l/min are extremely more expensive and complex to implement.

It is, therefore, necessary, if it is desired to obtain readings at both low and high flow rates and at the same time maintain a low price for the final product, to use multiple flow meters or other additional systems and equipment that are able to guarantee measurement in both conditions.

Even the most recent pumps equipped with electronic control and flow estimation are not able to provide indications or measurements of the flow at both high and low flow rates and, in particular, in measurements at low flow rates, they make numerous measurement errors.

The increase in the tools needed to extend the range entails some possible disadvantages including:
- the increase in costs due to greater instrumentation;
- the increase in complexity of the hydraulic systems on which flow measurements must be carried out;
- the need to carry out maintenance on multiple instruments with the consequent increase in downtime for the system and maintenance costs;
- the presence of unwanted pressure losses due to the fact of having to insert an instrument for low flow rates into a duct for high flow rates;
- the most complex and difficult reading and analysis of data.

### Purpose of the invention

The purpose of the present invention is therefore to provide a flow meter that allows resolving the inconveniences and critical issues mentioned above.

In particular, the aim of the present invention is to create a flow meter that allows, for example in combination with an electronic or electromechanical pump, the measurement of the flow rate of a fluid at low flow rates and the estimation, by the pump, of the same fluid at high flow rates, limiting pressure losses.

Another purpose of the present invention is to provide a flow meter for the measurement at high and low flow rates of a fluid that passes through it, extending the measurement ranges compared to the flow meters present in the prior art.

A further purpose of the present invention is to provide a flow meter for measurement at high and low flow rates which does not require the use of a second flow meter or other instrumentation.

Another object of the present invention is to provide a flow meter for measurement at high and low flow rates, which does not require increasing the complexity of the hydraulic systems.

A further object of the present invention is to provide a flow meter for measurement at high and low flow rates which requires minimal maintenance.

Another object of the present invention is to provide a flow meter that is simple to set up.

A further purpose of the present invention is to realize a flow meter for measuring high and low flow rates that is economical to manufacture and simple to install by virtue of the advantages achieved.

These and other purposes are achieved by a flow meter according to the attached independent claim.

Further detailed technical features are reported in the attached dependent claims.

### Brief description of the figures

The present invention will be now described, for illustrative but not limitative purposes, according to its preferred embodiments, with particular reference to the figures of the enclosed drawings, wherein:
- figures 1A-1C are perspective views of different embodiments of a flow meter with parallel bypass according to the invention;
- figures 1D-1E are perspective views of different embodiments of a flow meter with parallel bypass and reinforcement structure according to the invention;
- figures 2A-2B are sectional views of different embodiments of a flow meter with bypass and Venturi tube according to the invention;
- figures 3A-3B are sectional views of different embodiments of a flow meter with coaxial bypass and axial impeller, having respectively parallel axis magnets (figure 3A) and radial axis magnets (figure 3B);
- figure 4 is a perspective view of the flow meter with coaxial bypass of figure 3B;
- figures 5A-5B are sectional views illustrating the operation respectively at high (5A) and low (5B) flow rates of the flow meter of figure 3B;
- figures 6A-6B are perspective sectional views of the flow meter with coaxial bypass in the embodiment with two axial impellers;
- figure 7 is a graph that compares the pressure drops, as the flow rate varies, of the flow meters of figures 1D and 1E;
- figure 8 is a graph that compares the pressure drops and the linearity of the rpm, as the flow rate varies, of the flow meters with bypass of the embodiments visible in figures 1D, 1E, and with only the axial impeller inserted in a 20mm duct.

### Detailed description

With reference to the figures mentioned, preferred embodiments of a flow meter are represented with bypass according to the invention.

Referring to the figures above, the flow meter object of the invention is indicated with the reference numeral 100 and, in a first embodiment, according to the present invention, comprises a casing 1, which has two different ducts 11, 12, in which a fluid flows, whose flow rate has to be measured.

In particular, the casing 1 has a first duct 11 or bypass duct, in which the fluid flows at low flow rates, and a second duct 12, in which the fluid flows at high flow rates.

The casing 1 of the flow meter 100 has a first end 101, into which the fluid enters, and a second end 102, from which the same fluid exits.

In preferred embodiments, the ends 101 and 102 have threads for connecting the flow meter 100 to other elements of a plumbing system, such as pumps or pipes.

Advantageously, if the fluid has a low flow rate, it passes through the first bypass duct 11 and the flow meter 100 measures the flow rate while, if the fluid has a high flow rate, it passes through the second duct 12, and the measurement or estimate the flow rate is typically entrusted to an electromechanical pump equipped with electronics for measuring the fluid at high flow rates, which can be positioned downstream or upstream of the flow meter 100.

In particular, the electronic or electromechanical pump can be connected directly or indirectly, for example by means of ducts or pipes, to the flow meter 100.

Advantageously, the combination of flow meter 100 and electromechanical pump allows good flow measurement at both high and low flow rates.

In fact, the measurement at low flow rates is entrusted to the flow meter 100 (the electromechanical pump at low flow rates is not capable of carrying out precise measurements) while, at high flow rates, the estimate or measurement is entrusted to the electromechanical pump since the flow meter, in some of its embodiments, may not be able to estimate it correctly.

In some embodiments, as will be better illustrated below, in the case of the presence of a high flow rate fluid, the crossing occurs both through the second duct 12 and through the first duct 11.

In a generic embodiment, the flow meter 100 also comprises:
- a measuring element 2 for measuring the flow at low flow rates and arranged inside the first duct 11;
- a closing element 3 adapted to prevent the passage of the flow in one of the two ducts 11, 12 depending on the flow rate;
- an elastic element 4, connected to the closing element 3 and capable of bringing it back into position after it has been subjected to a high flow rate flow.

In preferred embodiments, the flow meter 100 also comprises a deflector 7 to convey the flow in the direction of the first duct 11.

More in detail, if the flow is at low flow rates, the closing element 3 keeps the duct 12 closed and the fluid can exit the casing 1 only through the duct 11.

When the flow is at high flow rates, the pressure of the liquid overcomes the resistance of the elastic element 4, which kept the closing element 3 in position, and closed the second duct 12, moving the same closing element 3, which can operate in closing on the first duct 11.

Advantageously, when the fluid has overcome the resistance of the elastic element 4, the closing element 3 closes, totally or partially, the first duct 11 and the fluid can exit only from the second duct 12 or from both ducts 11 and 12.

Subsequently, if the flow returns to having low flow rates, no longer being able to overcome the resistance of the elastic element 4, the latter moves the closing element 3 bringing it to its initial position, to close the second duct 12 and let the fluid come out only from the first duct 11.

In other words, the elastic element 4 assumes a rest or closing configuration, in which the closing element 3 closes the second duct 12 and the pressure of the fluid does not overcome its resistance and a stressed or opening configuration, in which the closing element 3 opens the second duct 12, and the pressure of the fluid is able to overcome its resistance.

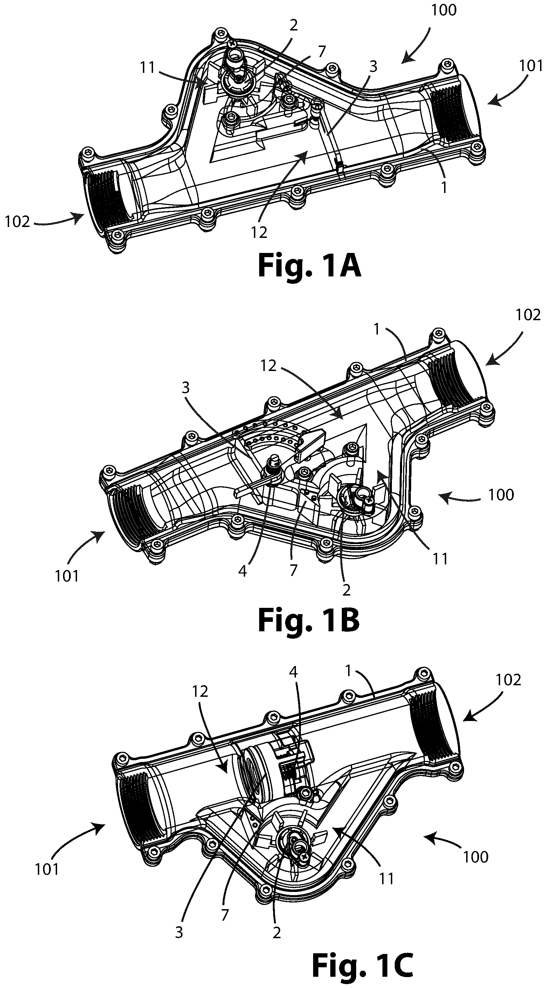

With reference to the embodiments visible in figures 1A-1E, a flow meter 100 with parallel bypass is visible.

In the embodiments of figures 1A-1E, the measuring element 2 is an impeller, by way of example a radial impeller, positioned inside the first bypass duct 11.

In these embodiments, the first duct 11 and the second duct 12 are placed parallel to each other.

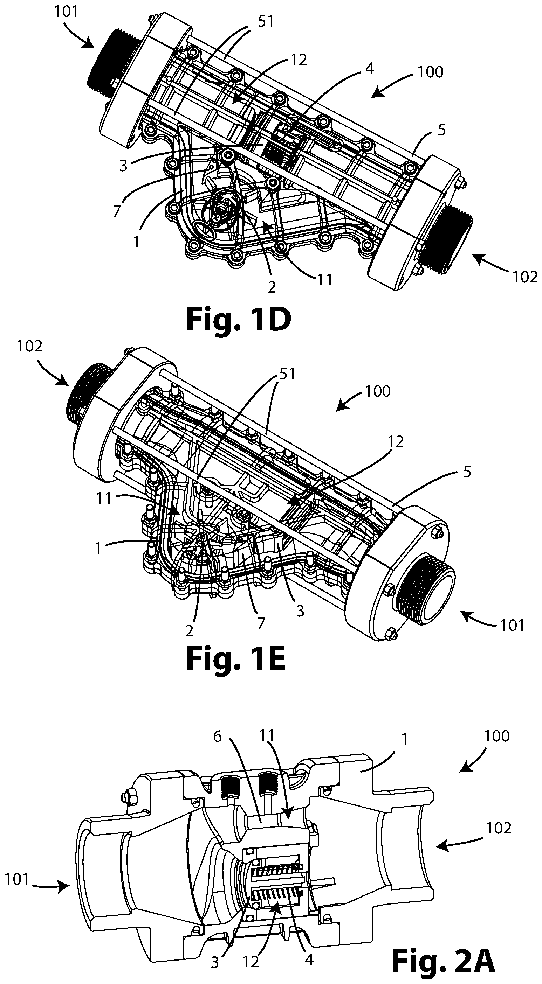

More in detail, the embodiments illustrated in figures 1A, 1B, and 1E present a bulkhead closing element, while, in the embodiments illustrated in figures 1C and 1D, the closing element is a shutter.

With reference to figure 1A, a first embodiment of the flow meter 100 object of the invention is illustrated, in which the measuring element 2 is a radial impeller, the closing element 3 is a bulkhead and the elastic element is a torsion spring arranged inside the casing 1.

In figure 1B, however, a second embodiment of the present invention is visible, in which the elastic element 4, also in this case a torsion spring, is positioned externally to the casing 1 so that the elastic element 4 itself can be easily adjusted from the outside.

More in detail, the embodiment of figure 1A is structurally more resistant than the embodiment of figure 1B and has the advantage of obtaining greater water tightness from the connections of the casing 1 and the output of the spring shaft.

In the embodiments visible in figures 1A and 1B, the low flow rate fluid flows in the first duct 11, causing the measurement element 2 to rotate, which allows the flow rate to be measured. In case of the passage of a fluid at a high flow rate, the flow, overcoming the resistance of the elastic element 4, moves the closing element 3 (bulkhead), which closes the first duct 11 and allows the fluid to escape from the casing 1 through the second duct 12.

With reference to figure 1C, an embodiment of the flow meter 100 is illustrated, in which the closing element 3 is a shutter positioned, together with the elastic element 4, inside the second duct 12.

In this case the elastic element 4 is a compression spring.

Compared to this third embodiment, the elastic element 4 of the embodiment of figure 1A is more easily calibrated and the flow meter 100 is overall more resistant to the pressure of a high flow rate fluid.

In figure 1D, a flow meter 100 similar to that of figure 1C is visible, reinforced by means of a reinforcing structure 5, positioned externally to the casing 1, designed to increase the pressure resistance of the casing 1.

More in detail, the reinforcing structure 5 is positioned externally to the second duct 12, in which the high-flow fluid flows.

With reference to figures 1D and 1E, the reinforcing structure 5 wraps the ends 101 and 102 of the casing 1 and includes cylindrical elements 51 arranged along the direction of the main extension of the casing 1.

Advantageously, the reinforcing structure 5 is also threaded at the ends 101 and 102. This thread allows the connection to other elements of a hydraulic system such as pumps, pipes, ducts, etc.

By way of example, the reinforcement structure 5 is made of metallic material.

In the embodiment of figure 1D, the second duct 12 comes into operation with high-flow fluids, which allow the shutter to open.

Compared to this last embodiment, that of figure 1A, advantageously, allows a total conveyance of the flow through the second duct 12 when the closing element 3 is open and the flow that passes through the first duct 11 is more silent.

With reference to figure 1E, a fifth embodiment of the flow meter 100 with parallel bypass is visible, in which, unlike the embodiment of figure 1D, the closing element 3 is not a shutter but is a bulkhead and the elastic element 4 is not a compression spring but a torsion spring.

In this embodiment, in the case of high flow rate, the reinforcing structure demonstrates its effectiveness. In fact, the tilting bulkhead comes into operation correctly by opening the bypass (second duct 12).

The embodiments with bulkhead closing element 3 remain preferred to the other embodiments described so far, as they guarantee the complete opening of the second duct 12, which involves less noise.

Furthermore, the flow meter 100 of figure 1E, as well as the other bulkhead flow meters 100, has excellent performance both in relation to pressure drops and in terms of noise.

With reference to figures 2A-2B, flow meters 100 are visible, which operate according to the Venturi differential pressure principle.

In such flow meters 100, the closing element 3 is a shutter and the elastic element 4 is a compression spring.

In these embodiments, the measuring element 2 is a differential pressure sensor that reads the low flow rates that pass through at least one Venturi tube 6. The Venturi tubes 6 are placed in correspondence with the first duct 11.

More in detail, the differential pressure sensor (not visible in the figures) is able to read the Delta-P due to the variation in flow speed imposed by the Venturi tubes 6 on the fluid flowing through them.

Referring to figure 2A, the flow meter 100 has a parallel bypass. In fact, the two ducts 11 and 12 are arranged parallel to each other.

In particular, when the fluid is at a low flow rate, it flows through the Venturi tube 6 of the first duct 11 and the differential pressure sensor measures the flow rate. In case of low flow rate, the closing element 3 (shutter) keeps the second duct 12 closed.

As the flow rate increases, the growing pressure exerted by the flow manages to overcome the resistance of the elastic element 4 and open the shutter, allowing the flow to also enter the second duct 12.

It is necessary to size the Venturi tube 6 in order to impose a minimum Delta-P, due to the minimum sensitivity of the differential pressure sensors, compared to a minimum flow rate.

At the same time, it is necessary not to reach too high-pressure drops for higher flow rates, for example up to 30 l/min.

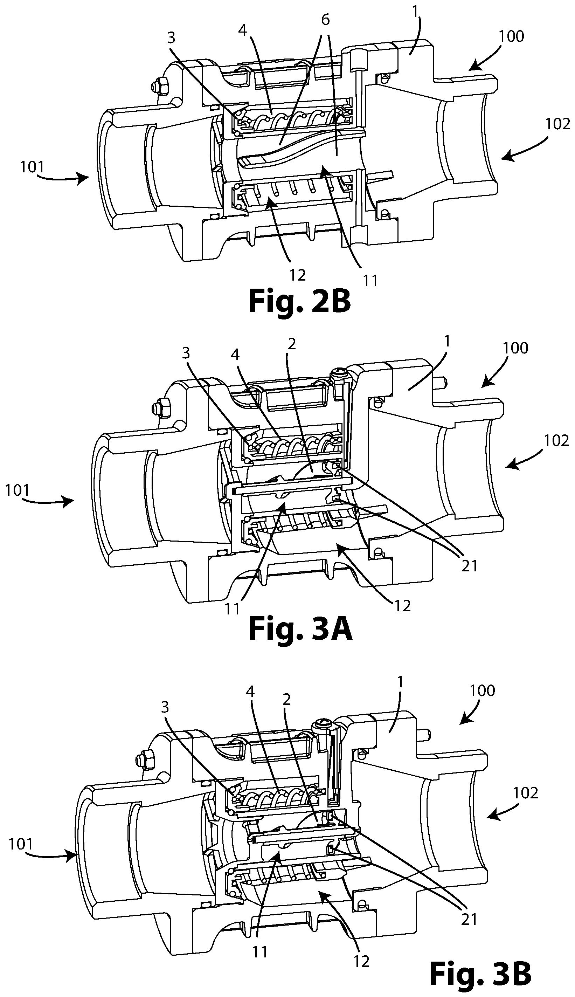

With reference to the embodiment of figure 2B, an attempt was made to improve the embodiment of figure 2A by increasing the sensitivity of the Venturi tube and arranging two Venturi tubes 6 in parallel.

The flow meter 100 of figure 2B is a coaxial bypass flow meter.

More in detail, as visible in figure 2B, the first duct 11 has two Venturi tubes 6 in parallel, a first convergent tube and a second divergent tube.

Advantageously, in this situation, it is possible to double the Venturi effect in the first duct 11 and reduce the pressure drops of the closing element 3 compared to the embodiment of figure 2A.

Even more advantageously, in this embodiment, the closing element 3 is a toroidal shutter while the bypass is coaxial since the first duct 11 is arranged coaxially with the second duct 12.

Operationally, when the flow is at a low flow rate, it flows in the first duct 11 through the Venturi tubes 6 while, when the flow is at a high flow rate, it pushes the closing element 3 (shutter), which compresses the elastic element 4 allowing the fluid to also pass into the second duct 12.

With reference to figures 3A-3B, further embodiments of flow meters 100 with coaxial bypass are visible.

In such flow meters, the closing element 3 is a toroidal shutter, the elastic element 4 is a compression spring and the measuring element 2 is an axial impeller arranged inside the first duct 11.

In these embodiments, the two ducts are arranged coaxially, with the first duct 11 arranged internally and coaxially with the second duct 12.

With reference to figures 3A and 3B, an embodiment of the flow meter 100 is illustrated, in which the low flow rate flow is conveyed inside the first duct 11 and rotates the impeller, which allows the flow rate to be measured.

To measure the flow rate in the first duct 11, two magnets 21 arranged internally thereof are used, which allow the reading of the revolutions per minute (RPM) of the axial impeller and the consequent measurement of the flow rate.

In particular, the two magnets 21 pass facing a Hall sensor, arranged in a seat present in the first duct 11, which allows the measurement of the revolutions per minute and consequently allows the determination of the flow rate of the fluid passing through the first duct 11.

More in detail, the two magnets 21 can be arranged, always inside the impeller 2, with a parallel axis with respect to the axial impeller 2 itself (figure 3A) or with a radial axis with respect to the axial impeller 2 itself (figure 3B).

As the flow rate and therefore the pressure drops increase, the increasing pressure manages to open the closing element 3 (toroidal shutter), which opens the second duct 12 and allows the flow to pass through.

The embodiments with axial bypass and shutter closure, for example, visible in figures 3A and 3B, present excellent behavior in terms of pressure drops, good silence, and good reading of the minimum flow, as well as reduced overall dimensions compared to the previous embodiments.

Furthermore, the cost is reduced compared to other embodiments, in which a differential pressure sensor is present, and the consequent difficulty in finding such a sensor having the required requirements.

It is necessary that the rotation speed of the impeller is uniform and that a slowdown is avoided when an impeller blade passes close to the Hall sensor.

Referring to figure 3B, a flow meter 100 with coaxial bypass and shutter closure is visible.

This embodiment works operationally like the embodiment of figure 3A, but presents an improvement due to the fact that the obstruction on the first duct 11 due to the seat of the Hall sensor is eliminated.

This positioning of the Hall sensor caused the slowdown of the impeller mentioned previously, due to the fact that the structure containing it is very bulky and partially obstructs the first duct 11.

This improvement is due to the radial positioning of the magnets 21 with respect to the axial impeller 2.

In particular, the magnets 21 of the axial impeller 2, being positioned with a radial axis with respect to the impeller, allow the Hall sensor to be positioned outside the first duct 11.

Advantageously, this embodiment allows to obtain lower pressure drops, better silence and uniform rotation speed of the impeller 2.

In a further embodiment, the impeller is made of plastoferrite. In this embodiment, due to the characteristics of the material, in which the impeller is made, the presence of the magnets 21 is not necessary.

In fact, the Hall sensor is able to detect the rotation of the plastoferrite impeller, determining its revolutions per minute and consequently the flow rate of the fluid.

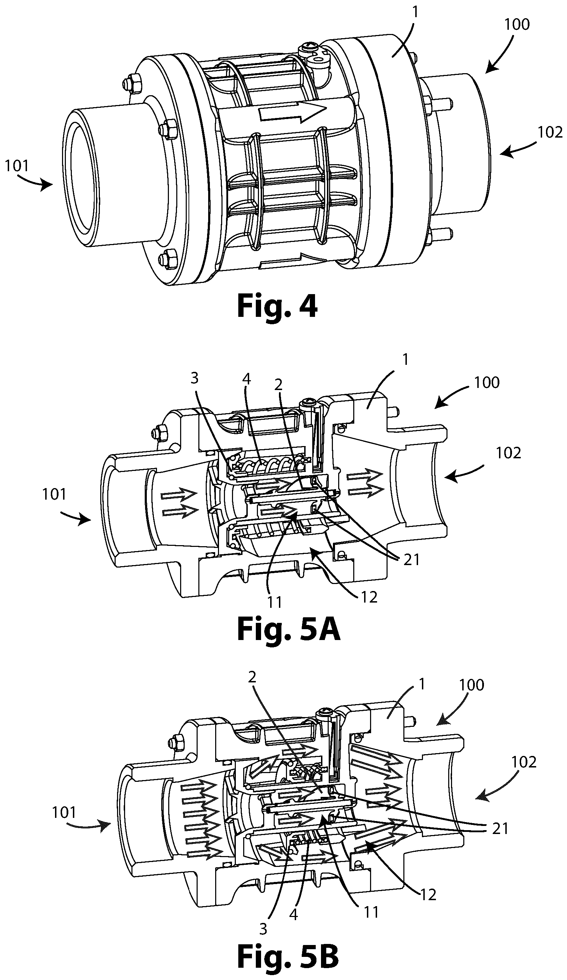

In figure 4 the flow meter with coaxial bypass of figure 3B is visible from the outside.

Referring to figures 5A and 5B, the operation of the flow meter with coaxial bypass of figure 3B at low flow rate (figure 5A) and at high flow rate (figure 5B) is visible.

In figure 5A it is visible how the flow entering from the first end 101 passes through the flow meter 100 in the first duct 11 and then exits from the second end 102. During transit in the first duct 11, the flow causes the measuring element 2 to rotate, which allows the measurement of the flow rate.

In figure 5B it is visible how the flow entering from the first end 101 manages, thanks to its pressure, to push the closing element 3 overcoming the resistance of the elastic element 4. In this situation, the flow can pass through the flow meter 100 both in the first duct 11 and in the second duct 12 and the estimate of the flow rate is entrusted to an electronic or electromechanical pump.

This electronic or electromechanical pump, equipped with electronics for measuring the fluid at high flow rates, is connected directly or indirectly to the flow meter 100 and positioned downstream or upstream of the same flow meter 100.

Advantageously, the flow meter 100 can in fact be installed in a system also comprising an electronic or electromechanical pump, which, via an electronic card present inside it, is capable of making flow estimates at high flow rates.

Furthermore, with reference to the flow meter 100 with coaxial bypass, it is possible to measure the fluid at high flow rates through the analysis of the increasing monotonic response of the rotation speed of the axial impeller 2.

Advantageously, the analysis of this monotonic response occurs by means of the Hall sensor.

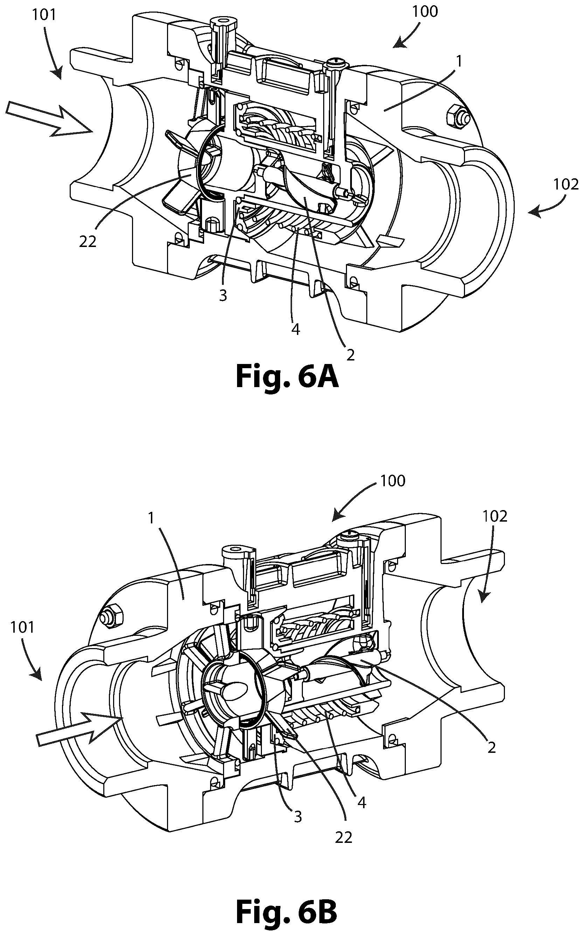

With reference to figures 6A and 6B, an embodiment of the flow meter 100 with coaxial bypass is illustrated, in which there is a second measuring element 22, in particular a second impeller, for measuring the fluid even at high flow rates.

As visible in figures 6A and 6B, the second impeller 22 is of the axial type and is advantageously placed upstream with respect to the shutter 3 and the axial impeller 2.

The second impeller 22 is configured to move when the second duct 12 is opened by the closing device 3.

Advantageously, in this embodiment, the total flow measurement is obtained by combining the data obtained from the axial impeller 2 and the data obtained from the impeller 22.

Advantageously, the rotation of each impeller is detected by a respective Hall sensor.

Preferably, the data from the two impellers are analyzed, and combined, and linked by an electronic control.

Still preferably, the combination of the measurement of a single impeller 2 with bypass and estimation of the electronic pump is also entrusted to an electronic control, which, in addition to estimating the flow rates, carries out the correct combination of the two flow rate ranges.

Advantageously, the embodiment with two impellers allows the flow meter 100 to measure a fluid at both high and low flow rates.

Even more advantageously, it is possible to have a single flow meter 100 capable of measuring the flow at low flow rates, at high flow rates, and in intermediate ranges, extending the measurement range compared to known instruments.

To analyze and evaluate the performance of the different embodiments of the flow meters 100, tests were carried out, in which some of the embodiments previously described were compared.

It should be noted that these tests were carried out in the laboratory with particular instruments and components of the flow meters and can be used as a comparison of the different embodiments under the same conditions of use.

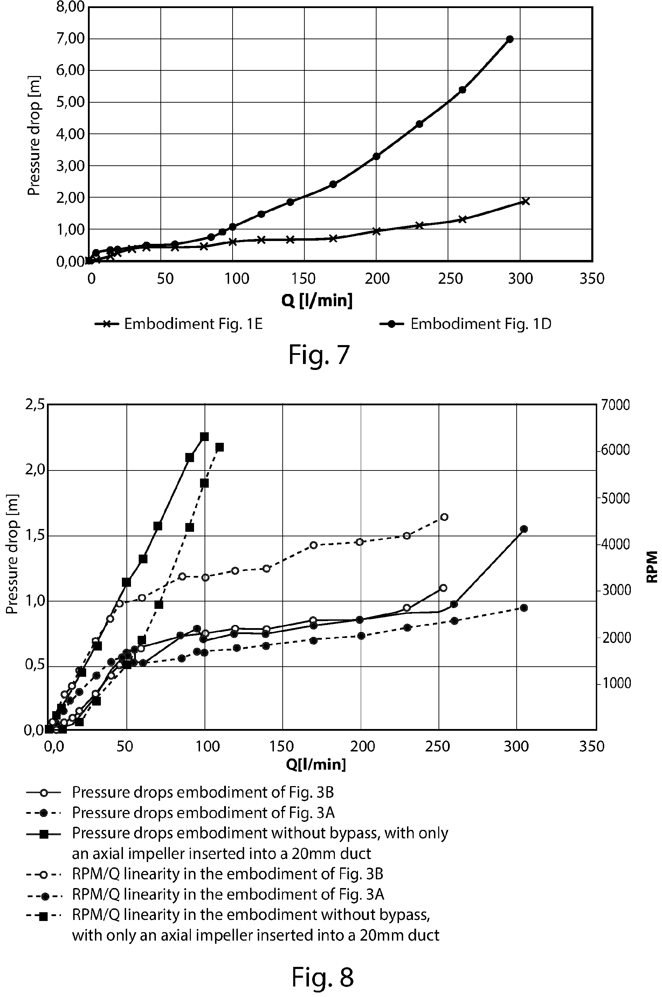

A first test, the results of which can be seen in figure 7, compared the pressure drops (in meters) in relation to the flow rate (in l/min) of some different flow meters. The embodiments compared were those of figure 1D, 1E.

From a reading of the graph, it can be seen that the embodiment of figure 1E has lower pressure losses compared to the embodiment of figure 1D.

In further tests, the threshold at which the flow rate (in l/min) allows the opening of the closing element 3 and the passage of the fluid into the second duct 12 was analyzed.

These tests were carried out for the embodiments of figures 1D and 1E.

Regarding the embodiment of figure 1D, the following data were obtained during a test run.

| **Flow Meter of** **Figure 1D** | | | | |
|---|---|---|---|---|
| **Q [l/min]** | **p1 [bar]** | **p2 [bar]** | **Delta p [bar]** | **H [m]** |
| **0** | -0,058 | -0,080 | 0,022 | n/d |
| **5** | -0,048 | -0,069 | 0,021 | -0,01 |
| **15** | -0,003 | -0,034 | 0,031 | 0,09 |
| **20** | 0,027 | -0,022 | 0,049 | 0,28 |
| **40** | 0,060 | -0,008 | 0,068 | 0,47 |
| **60** | 0,070 | 0,000 | 0,070 | 0,49 |
| **85** | 0,031 | -0,044 | 0,075 | 0,54 |
| **95** | 0,026 | -0,061 | 0,087 | 0,66 |
| **100** | 0,087 | -0,008 | 0,095 | 0,74 |
| **120** | 0,087 | -0,053 | 0,140 | 1,20 |
| **140** | 0,130 | -0,050 | 0,180 | 1,61 |
| **170** | 0,200 | -0,047 | 0,247 | 2,30 |
| **200** | 0,280 | -0,040 | 0,320 | 3,04 |
| **230** | 0,404 | -0,030 | 0,434 | 4,20 |
| **260** | 0,524 | -0,014 | 0,538 | 5,26 |
| **297** | 0,686 | 0,000 | 0,686 | 6,77 |

In particular, it was possible to notice how at the flow rate of 85 l/min, the limit for the movement of the closing element 3 for the opening of the second duct 12 occurred.

It was then analyzed how at the flow rate of 95 l/min the closing element 3 is in a partially open position and how at the flow rate of 100 I/min the closing element 3 is in a completely open position.

Regarding the embodiment of figure 1E, in one test run, the following data were obtained.

| **Flow Meter of** **figure 1E** | | | | |
|---|---|---|---|---|
| **Q [l/min]** | **p1 [bar]** | **p2 [bar]** | **Delta p [bar]** | **H [m]** |
| **0** | 0,001 | -0,018 | 0,019 | n/d |
| **5** | 0,023 | 0,001 | 0,022 | 0,03 |
| **15** | 0,046 | 0,013 | 0,033 | 0,14 |
| **20** | 0,062 | 0,019 | 0,043 | 0,24 |
| **30** | 0,036 | -0,019 | 0,055 | 0,37 |
| **40** | 0,095 | 0,035 | 0,060 | 0,42 |
| **60** | 0,107 | 0,047 | 0,060 | 0,42 |
| **80** | 0,110 | 0,047 | 0,063 | 0,45 |
| **100** | 0,113 | 0,036 | 0,077 | 0,59 |
| **120** | 0,086 | 0,003 | 0,083 | 0,65 |
| **140** | 0,029 | -0,055 | 0,084 | 0,66 |
| **170** | 0,068 | -0,020 | 0,088 | 0,70 |
| **200** | 0,070 | -0,040 | 0,110 | 0,93 |
| **230** | 0,098 | -0,030 | 0,128 | 1,11 |
| **260** | 0,128 | -0,019 | 0,147 | 1,31 |
| **304** | 0,205 | 0,002 | 0,203 | 1,88 |

In particular, it was possible to notice how at the flow rate of 30 I/min the limit for the movement of the closing element 3 for the opening of the second duct 12 occurred.

It was then analyzed that at the flow rate of 95 I/min the closing element 3, in this case a bulkhead, is in a partially open position (approximately at 45°) and that in this embodiment the closing element 3 is never in a completely open position, not even at maximum capacity.

Regarding the embodiment of figure 3A, the following data have been obtained.

| **Flow Meter of** **figure 3A** | | | | | |
|---|---|---|---|---|---|
| **Q [l/min]** | **p1 [bar]** | **p2 [bar]** | **Delta p [bar]** | **H [m]** | **RPM** |
| **0** | -0,046 | -0,075 | 0,029 | n/d | |
| **1** | n/d | n/d | n/d | n/d | 16 |
| **3** | n/d | n/d | n/d | n/d | 138 |
| **5** | -0,045 | -0,075 | 0,030 | 0,01 | 240 |
| **10** | -0,043 | -0,074 | 0,031 | 0,02 | 450 |
| **15** | -0,041 | -0,074 | 0,033 | 0,04 | 700 |
| **20** | -0,035 | -0,074 | 0,039 | 0,10 | 845 |
| **30** | -0,020 | -0,074 | 0,054 | 0,26 | 1200 |
| **40** | 0,000 | -0,074 | 0,074 | 0,46 | 1482 |
| **50** | 0,014 | -0,074 | 0,088 | 0,60 | 1578 |
| **55** | 0,015 | -0,074 | 0,089 | 0,61 | 1464 |
| **60** | 0,005 | -0,074 | 0,079 | 0,51 | 1420 |
| **85** | 0,030 | -0,070 | 0,100 | 0,72 | 1560 |
| **95** | 0,037 | -0,068 | 0,105 | 0,78 | 1656 |
| **100** | 0,031 | -0,066 | 0,097 | 0,69 | 1668 |
| **120** | 0,038 | -0,063 | 0,101 | 0,73 | 1740 |
| **140** | 0,045 | -0,057 | 0,102 | 0,74 | 1818 |
| **170** | 0,058 | -0,050 | 0,108 | 0,81 | 1932 |
| **200** | 0,074 | -0,038 | 0,112 | 0,85 | 2040 |
| **230** | 0,090 | -0,028 | 0,118 | 0,91 | 2196 |
| **260** | 0,112 | -0,012 | 0,124 | 0,97 | 2340 |
| **305** | 0,187 | 0,008 | 0,179 | 1,53 | 2640 |

In particular, it was possible to verify that the limit for the movement of the closing element 3 for the opening of the second duct 12 is at the flow rate of 60 l/min.

The results visible in the previous tables were detected using a flow meter 100 having an elastic element 4 of the compression spring type CO 1,8x41x80x8 of 10N, two magnets 21 of diameter 2mm and height 3mm of the attractive magnetic force of approx. 160g each, arranged one per blade and with reversed polarities.

Revolutions per minute (RPM) were detected with Hall sensor TLV49681TAKBKA1-ND and readings were taken with an oscilloscope.

The following tests have made it possible to identify how the embodiments with coaxial bypass and axial impeller lead to obtaining better results and performances compared to other embodiments.

Referring to figure 8, a graph is shown that compares the pressure drop and linearity curves in relation to the flow rate. Linearity is evaluated as the ratio of frequency in revolutions per minute (RPM) to flow rate in l/min (Q).

This graph relates to the embodiment of the flow meter 100 with coaxial bypass, in which the fluid at high flow rates is measured through the analysis of the increasing monotonic response of the rotation speed of the axial impeller 2.

The graph of figure 8 compares the curves relating to the embodiments with radial axis magnets (figure 3B), with parallel axis magnets (figure 3A) and to an embodiment, in which the casing 1 of the flow meter is simply a cylindrical duct with a diameter of 20mm, without bypass, inside which there is only an axial impeller and no other components.

In particular, with reference to the embodiment of figure 3A, it is visible how the linearity at low flow rates (up to 50 l/min) is almost close to an inclined straight line representable with y=60.197x + 29.39 and R2=0.9967.

From the graph in figure 8 it is also clearly visible that:
- in the embodiment in which only the axial impeller is present in the cylindrical duct, the linearity and pressure drops increase very quickly even at low flow rates and are considerably greater than in other embodiments for flow rates greater than 50l/min;
- in the embodiments with bypass there is a more accentuated inclination of the curve up to a flow rate of 50l/min and less accentuated for higher flow rates;
- the embodiment with radial magnets presents much greater linearity than the embodiment with parallel axis magnets, for all flow rates.

Advantageously, it is clear how the flow meters 100 with coaxial bypass (embodiments of figures 3A and 3B) are capable of measuring the flow rate in several decades and even up to 300 l/min.

Again advantageously, since the flow meter 100 is capable of obtaining the revolutions per minute of the measuring elements 2 and 22, it is possible to obtain the flow rate since the latter can be characterized a priori on the basis of the revolutions per minute of the measuring elements 2 and 22.

More in detail, by knowing a priori which flow rate corresponds to a certain value of revolutions per minute of the measuring elements 2 and 22, it is possible to establish the value once the flow passes through the flow meter 100.

From the description given, the characteristics of the flow meter with bypass, object of the invention, just as the advantages, are clear.

Finally, it is clear that numerous other variations can be made to the system in question, without departing from the principles of novelty inherent in the inventive idea, just as it is clear that, in the practical implementation of the invention, the materials, shapes and the dimensions of the illustrated details may be any according to needs and they may be replaced with other equivalent ones.

Where the features and techniques mentioned in any claims are followed by reference marks, such reference marks have been included for the sole purpose of increasing the intelligibility of the claims and, accordingly, such reference marks have no limiting effect on the interpretation of each element identified by way of example by these reference signs.

## Claims

1. A flow meter (100) for measuring the flow rate of a fluid **characterized by** comprising:
a casing (1) having a first end (101) into which the fluid enters and a second end (102) from which the fluid exits, and within which a first duct (11) for receiving the fluid is present when it is at low flow rates;
a measuring element (2) arranged internally to the first duct (11) for measuring the flow within the first duct (11);
said flow meter (100) being **characterized by** also comprising:
a second duct (12), placed inside the casing (1), for receiving the fluid at high flow rates;
a closing element (3) which, when the flow rate exceeds an opening threshold, allows the fluid to flow into the second duct (12);
an elastic element (4), connected to the closing element (3), for moving the closing element (3) from a closing configuration, in which the flow rate does not exceed the opening threshold, not overcoming the resistance of the elastic element (4) and the closing element (3) closes the second duct (12), to an opening configuration in which the flow rate exceeds the opening threshold, overcoming the resistance of the elastic element (4), and the closing element (3) opens the second duct (12).

2. Flow meter (100) according to claim 1 **characterized in that**, when the flow rate exceeds the opening threshold, the closing element (3) closes at least partially the first duct (11) and allows the fluid to flow, totally or partially, into the second duct (12).

3. Flow meter (100) according to one of the previous claims **characterized in that** the first end (101) and the second end (102) are threaded.

4. Flow meter (100) according to one or more of the preceding claims **characterized in that** the first duct (11) is arranged internally and coaxially with respect to said second duct (12).

5. Flow meter (100) according to one or more of the preceding claims **characterized in that** said measuring element (2) is an axial impeller.

6. Flow meter (100) according to the preceding claim **characterized in that** said measuring element (2) is made of plastoferrite.

7. Flow meter (100) according to one or more of the preceding claims **characterized in that** said closing element (3) is a toroidal shutter.

8. Flow meter (100) according to one or more of the preceding claims **characterized in that** said elastic element (4) is a compression spring.

9. Flow meter (100) according to one or more of the preceding claims **characterized by** comprising:
one or more magnets (21) arranged internally to the measuring element (2),
at least one sensor configured to detect the transit of the magnets (21) and determine the flow rate within the first duct (11).

10. Flow meter (100) according to claim 9 **characterized in that** said magnets (21) are arranged in a radial or axial position with respect to said measuring element (2).

11. Flow meter (100) according to claim 9 **characterized in that** said sensor is a Hall sensor (11).

12. Flow meter (100) according to one or more of the preceding claims **characterized by** comprising an additional measuring element (22), placed upstream of the measuring element (2), suitable for measuring the flow of the fluid at high flow rates in case of opening of the second duct (12) by the closing device (3).

13. A plant for measuring the flow of a fluid comprising:
a flow meter (100) according to one or more of the preceding claims for measuring fluid at low flow rates;
an electronic or electromechanical pump equipped with electronics for measuring the flow of the fluid at high flow rates, connected directly or indirectly to the flow meter (100), for measuring the flow of the fluid at high flow rates.
